Europäisches Patentamt

European Patent Office

Office européen des brevets

(11) Veröffentlichungsnummer: **0 483 574 A2**

# EUROPÄISCHE PATENTANMELDUNG

(21) Anmeldenummer: **91117433.2**

(51) Int. Cl.5: **B29C 45/18**, //B29K67:00

(22) Anmeldetag: **12.10.91**

(30) Priorität: **01.11.90 CH 3475/90**

(43) Veröffentlichungstag der Anmeldung:
**06.05.92 Patentblatt 92/19**

(84) Benannte Vertragsstaaten:
**DE ES FR**

(71) Anmelder: **BUCHER-GUYER AG Maschinenfabrik**

**CH-8166 Niederweningen(CH)**

(72) Erfinder: **Voser, Karl**
**Binzacherweg 17**
**CH-8166 Niederweningen(CH)**
Erfinder: **Kurth, Erhard**
**Gartenweg 1**
**CH-5304 Endingen(CH)**
Erfinder: **Rizzoni, Jean-Pierre**
**20, Allée Levant**
**F-95150 Taverny(FR)**

(54) **Vorrichtung für die Beschickung einer Plastifiziereinrichtung.**

(57) Eine Vorrichtung für die Beschickung einer Plastifiziereinrichtung einer Maschine zur Verarbeitung von Polyester, besteht aus einem jochartigen Führungsgestell (4) einer Stopfeinheit (1), in welchem ein Kolben (5) hydraulisch antreibbar ausgebildet ist, und das in Stopfrichtung betrachtet an einem mit der Plastifiziereinrichtung verbundenen, seitlich mit Polyester beschickbaren Stopfgehäuse (6) befestigt ist. Der Kolben (5) weist einen doppelten Kolbenboden (11, 16) und Kolbenwände (12, 18) auf, die einen Zwischenraum (22) bilden. Zur Lagerung des Kolbens (5) ist eine zentrale Führungssäule (13) und das Führungsgestell (4) der Stopfeinheit (1) vorgesehen.

Fig. 1

Die Erfindung betrifft eine Vorrichtung für die Beschickung einer Plastifiziereinrichtung nach dem Oberbegriff des Patentanspruches 1.

Vorrichtungen dieser Art sind u.a. bei Spritzgiessmaschinen bekannt.

Eine der bislang verwendeten Stopfeinheiten besitzt einen in einem zylindrischen Rohr etwa senkrecht zur Achse der Plastifiziereinrichtung translatorisch angetriebenen Kolben bzw. Stopfkolben, dessen Kolbenplatte sich in einer schachtähnlichen, auf einem Support befestigten Führungsvorrichtung hin und her bewegt. Das den Stopfkolben aufnehmende zylindrische Rohr ist an einem Flansch mittels Stützen auf dem Support befestigt.

Bei dieser bekannten Ausführungsform wird in der offenen schachtähnlichen Führung die Aushärtung der aufgegebenen Masse vorzeitig beschleunigt, sodass Verkrustungen an Führung und Kolbenplatte eintreten, die sich störend auf den Verarbeitungsprozess auswirken.

Zudem erweist sich diese offene Konstruktion in der näheren Umgebung durch den Geruch der verarbeiteten Masse als schädliche Belastung für Mensch und Umwelt.

Deshalb stellt sich an die Erfindung die Aufgabe, eine Vorrichtung der eingangs genannten Art zu schaffen, mit der die aufgeführten Nachteile weitgehend zu beheben und die schädliche Geruchbildung unter ökonomischen Massnahmen abbaubar sind.

Erfindungsgemäss wird diese Aufgabe dadurch gelöst, dass der Kolben einerseits durch eine Kolbenwand an dem Führungsgestell und andererseits an einer wenigstens annähernd koaxial zum Kolben an dem Führungsgestell befestigten Führungssäule verschiebbar gelagert ist.
Damit wird die Voraussetzung zur Ausgestaltung einer von Geruchemissionen erheblich reduzierten Stopfeinheit geschaffen.

Damit eine Wärmeübertragung des als Antriebsmittel verwendeten Oels durch den Kolben auf die zu verarbeitende Masse weitestgehend verhindert werden kann, kann die wenigstens annähernd zentral angeordnete Führungssäule eine den Jochträger des Führungsgestells durchdringende erste Leitung für ein Druckmedium aufweisen, die an dem gegenüberliegenden Ende der Führungssäule in einen an der Rückseite des Kolbenbodens gebildeten, veränderbaren ersten Hohlraum mündet, und ein durch die Kolbenwand und die Führungssäule begrenzter, veränderlicher zweiter Hohlraum kann mit einer zweiten Leitung für ein Druckmedium verbunden sein.

Eine solche Ausführungsform gestattet eine einfache und kompakte Bauweise des Erfindungsgegenstandes.

Es erweist sich als vorteilhaft, wenn die zweite Leitung in der Führungssäule und dem Jochträger angeordnet ist, wodurch eine nicht störungsanfällige Leitungsführung erreicht werden kann.

Vorteilhaft sind die Hohlräume wechselweise von einem Druckmedium beaufschlagbar bzw. entleerbar, wozu beispielsweise ein 4/2-Weg-Ventil verwendet werden kann.

Damit eine Wärmeübertragung vom Druckmedium über den Kolben auf die Masse weitgehend unterbunden werden kann, ist es zweckmässig, dass eine von dem Kolbenboden beabstandete Kolbenplatte an einem mit dem Kolbenende verbundenen, im Abstand zur Kolbenwand angeordneten Kolbenmantel in dem Führungsgestell verschiebbar gelagert ist.

Der dadurch gebildete Zwischenraum dient der Isolation zwischen Druckmedium und verarbeiteter Masse.

Als günstig erweist es sich bei der Ausbildung und Anordnungsweise der Hohlräume, wenn das dem ersten Hohlraum zugewendete Ende der Führungssäule einen die Hohlräume trennenden, an der Kolbenwand dicht anliegenden Bund aufweist.

Die besondere Ausführungsform des Führungsgestells eignet sich ganz besonders in Verbindung mit einem an der Plastifiziereinrichtung befestigten Stopfgehäuse, an dem das Führungsgestell befestigt werden kann.

In diesem Zusammenhang kann das Stopfgehäuse etwa zylindrisch ausgebildet sein und im Anschluss an den der Plastifiziereinrichtung zugewendeten Stopfzone einen erweiterten, mit einer etwa rechtwinklig angeordneten Beschickungsöffnung ausgebildete Füllzone aufweisen. Dabei kann die Beschickungsöffnung wahlweie um die Achse der Stopfeinheit verdreht befestigt werden.

In der Austrittszone der Masse zur Plastifiziereinrichtung hin ist das Stopfgehäuse zunehmend verengt ausgebildet, damit in der Nähe der Uebergangszone ein Massestrom gewährleistet ist.

Dabei erweist es sich als vorteilhaft, wenn die Austrittszone im Querschnitt betrachtet von einem konkav ausgebildeten Anfangsbereich in einem konvexen Abschnitt übergeht, sodass an der Wand keine Rückstände entstehen.

Durch den relativ langen Weg des Kolbens im Führungsgestell und den sich beim Ausstossen des Kolbens reduzierenden seitlichen Lagerabstand an Führungsgestell und Führungssäule bedarf es einer weiteren Führung des Kolbens im Stopfgehäuse. Dabei erweist es sich als besonders günstig, wenn die Stopfzone als Führung des Stopfkolbens ausgebildet ist und auf etwa halbem Ausstossweg des Kolbens beginnt.

Das hintere Ende der Füllzone erstreckt sich in den Bereich der Kolbenlagerung an dem Führungsgestell.

An dieser Stelle befindet sich vorzugsweise eine zu der Füllzone des Stopfgehäuses hin wirksame Abstreifvorrichtung, damit die Kolbenplatte an ihrem Umfang von allfälligen Masseresten befreit bzw. gereinigt wird.

Vorteilhaft ist in der hinteren Endlage des Kolbens die Kolbenplatte gegenüber der Abstreifvorrichtung zurückversetzt, sodass sich zwischen Kolben und Stopfgehäuse keine Masse festsetzen kann.

Im Zusammenhang mit einer an die Stopfeinheit anzubauenden kontinuierlich oder diskontinuierlich Masse zuführenden Beschickungseinrichtung erweist es sich als günstig, wenn die Beschickungsöffnung mit einer Kupplungsvorrichtung ausgebildet ist.

Zur einfacheren Behebung von Störungen und zur Verbesserung der Zugänglichkeit, kann das Führungsgestell von dem Stopfgehäuse wenigstens teilweise abhebbar ausgebildet sein.

Insbesondere ein Scharnier zwischen Führungsgestell und Stopfgehäuse kann diese Möglichkeiten verwirklichen.

Zur Feststellung des hinteren (oberen) Totpunktes des Kolbens, der Eintauchposition des Kolbens in die Stopfzone, einer Kolbenrückzugsposition im unteren Bereich der Stopfzone und des vorderen (unteren) Totpunktes des Kolbens sind zur Steuerung des Beschickungsprozesses seitlich an dem Führungsgestell befestigte Signalgeber angeordnet. Zu diesem Zweck ist das Führungsgestell mit einem parallel verlaufenden Schlitz versehen, durch den eine Befestigungsvorrichtung eines oder mehrerer mit dem Kolben verbundenen Initiatorelemente ragt.

Zu Reinigungszwecken und zur wahlweisen Aenderung der Austrittszone kann diese in einem von dem Stopfgehäuse abnehmbaren Teil angeordnet sein.

Im Sinne eines universelleren Einsatzes ist der abnehmbare Teil heiz- oder kühlbar ausgebildet.

Ein Ausführungsbeispiel der Erfindung ist in der Zeichnung dargestellt und nachstehend erläutert. Es zeigen:

Fig. 1    eine halb Schnitt, halb Ansicht-Darstellung einer erfindungsgemässen Stopfeinheit und

Fig. 2    eine Seitenansicht mit auszugsweiser Schnittdarstellung.

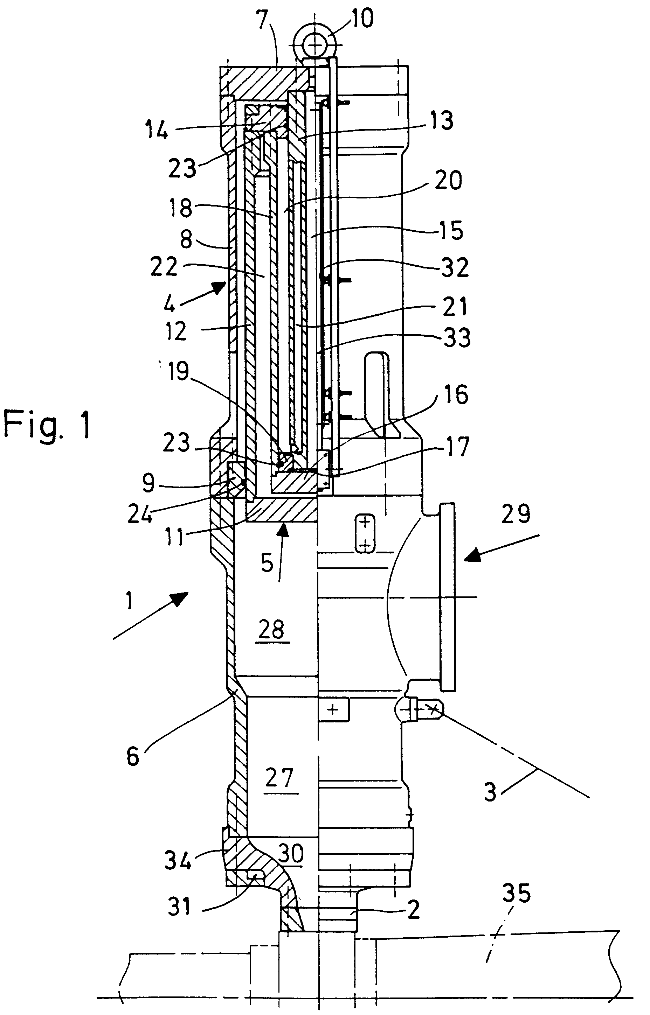

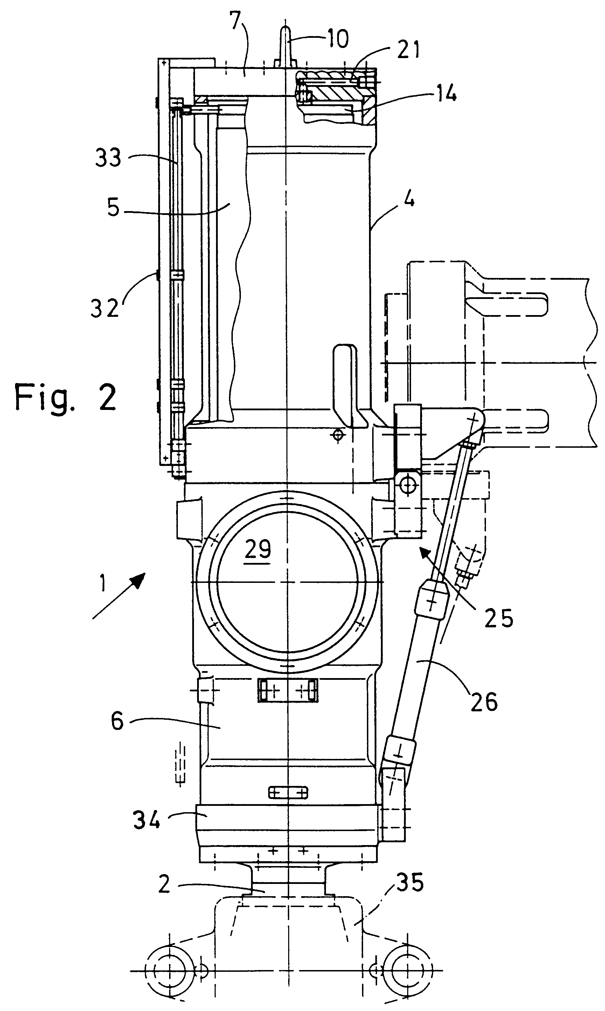

Die Fig. 1 und 2 zeigen eine Stopfeinheit 1 auf einer strichpunktiert angedeuteten Plastifiziereinrichtung 35 einer Kunststoffspritzgiessmaschine.

Zu der Befestigung der Stopfeinheit 1 sind eine Zwischenplatte 2 und wegen der Kippgefahr ein seitlich abstehendes Stützorgan 3 vorgesehen. Der ständerweise Aufbau besteht aus einem Führungsgestell 4 eines Kolbens bzw. Stopfkolbens 5 und einem mit der Plastifiziereinheit 35 über die Zwischenplatte 2 verbundenen Stopfgehäuse 6. Das jochartig ausgebildete Führungsgestell 4 besitzt einen obenliegenden Jochträger 7, bspw. in Form einer Platte und einen rohrförmigen Aufsatz 8, der an der Verbindungsstelle zum Stopfgehäuse 6 eine Lagerbüchse 9 des Kolbens 5 aufweist. Diese Lagerbüchse 9 sitzt fest in dem an dieser Stelle radial erweiterten Aufsatz 8. Zur Montage oder Demontage der Stopfeinheit 1 ist am Jochträger 7 ein Ring 10 befestigt. Innerhalb des Führungsgestells 4 ist der Kolben 5 durch einen an der Kolbenplatte 11, mit deren Umfang bündigen Kolbenmantel 12 ausgebildet, der in der Lagerbüchse 9 des Aufsatzes 8 gleitend geführt ist. Der zylindrisch ausgebildete Kolbenmantel 12 verhindert u.a., dass Masse aus der Füllzone 28 hinter die Kolbenplatte 11 gelangen kann. An der gegenüberliegenden Seite der Kolbenplatte 11 ist der Kolbenmantel 12 an einer an dem Jochträger 7 befestigten und sich in Bewegungsrichtung des Kolbens 5 erstreckenden, zentralen Führungssäule 13 geführten Gleitflansch 14 festgeschraubt, so dass die Führungssäule 13 und der Kolbenmantel 12 eine gemeinsame Achse aufweisen. Der Jochträger 7 und die mit ihm verschraubte Führungssäule 13 werden von einer zentralen ersten Leitung 15 für ein Druckmedium, bspw. Oel, axial durchsetzt, die an der Rückseite des Kolbenbodens 16 in einen veränderbaren ersten Hohlraum 17 mündet. Dieser erste Hohlraum 17 wird durch die Rückseite des Kolbenbodens 16, einer mit dessen Umfang bündigen Kolbenwand 18 und dem an dem freien Ende der Führungssäule 13 angeordneten Radialbund 19 gebildet. Letzterer liegt an der Innenseite der Kolbenwand 18 dicht an. Diese Kolbenwand 18 und die Führungssäule 13 bilden einen zweiten Hohlraum 20, der einenends durch den Radialbund 19 vom ersten Hohlraum 17 getrennt und den Gleitflansch 14 begrenzt ist. Beide Hohlräume 17, 20 sind bspw. mittels einem 4/2-Wege-Ventil wechselweise von einem Medium druckbeaufschlagt bzw. mit einem Tank leitungsverbunden. Zu diesem Zweck ist die Kolbenwand 18 mit dem Kolbenmantel 12 einen Zwischenraum 22 bildend an dem Gleitflansch 14 befestigt. Zur Bildung dichter Hohlräume 17, 20 sind der Gleitflansch 14 und Radialbund 19 mit einer Dichtung 23 ausgestattet, während eine Dichtung 24 in der Lagerbüchse 9 im Stopfgehäuse gasförmige Emissionen von der Umgebung zurückhält und/oder auch die Wirkung einer Abstreifvorrichtung aufweist. Dadurch, dass die Kolbenplatte 11 von dem Kolbenboden 16 beabstandet ist und der Kolbenmantel 12 und die Kolbenwand 18 einen anschliessenden Zwischenraum 22 bilden, wird die Wärme des zum Antrieb des Kolbens 5 benötigten Druckmediums nicht auf die Formmasse übertragen, sodass letztere nicht zusätzlich beeinflusst wird.

Das die Lagerung des Kolbens 5 aufnehmende Führungsgestell 4 ist mittels eines Scharnieres 25 an dem Stopfgehäuse 6 angelenkt und verschraubt. In Fig. 2 ist mit strichpunktierter Linie das seitlich um 90° verschwenkte Führungsgestell 4 gezeigt. Diese Betätigung wird durch eine einerseits an dem Stopfgehäuse 6 und andererseits an dem Führungsgestell 4 angelenkte, bspw. hydraulisch angetriebene Kolben-Zylindereinheit 26 durchgeführt. Zur Verriegelung beider Teile 4 und 6 dienen bspw. Schrauben, die durch strichpunktierte Linien angedeutet sind.

Das Stopfgehäuse 6 ist wie die mit ihm verbundenen Führungsgestell 4 und Kolben 5 vorzugsweise zylindrisch ausgebildet und besteht aus einer der Plastifiziereinrichtung 35 zugewendeten Stopfzone 27 sowie einer zwischen letzterer und dem Kolben 5 angeordneten Füllzone 28, die an ihrer Seite eine etwa rechtwinklig zur Achse der Stopfeinheit 1 verlaufende Beschickungsöffnung 29 und gegenüber der Stopfzone 27 eine grössere lichte Weite aufweist. Die Füllzone 28 ist im Sinne eines Expansionsraumes zu verstehen, sodass der zum Festsitzen neigende Kolben 5 von der Masse abgehoben, entspannt und die Stopfzone 27 entlüftet werden kann. Die in die Füllzone 28 sich absetzende Masse kann aushärten und ist von Zeit zu Zeit von der Wand zu entfernen.

Im Bereich der Plastifiziereinrichtung ist die Stopfzone 27 mit einer sich verengenden Austrittszone 30 ausgebildet, die im Querschnitt gesehen von einem konkav ausgebildeten Anfangsbereich in einen konvexen Abschnitt übergeht. Insgesamt kann die Austrittszone 30 zu Austausch- oder Reinigungszwekken als Teil 34 von dem Stopfgehäuse 6 abgenommen werden. Die Austrittszone 30 in Teil 34 ist heiz- und kühlbar ausgebildet, wozu eine Ringkammer 31 vorgesehen ist.

Hinsichtlich Stopfgehäuse 6 endet die Füllzone 28 einseitig etwa im Bereich der Kolbenlagerung des Führungsgestells 4 und weist in diesem Bereich eine die Masse zurückhaltende Abstreifvorrichtung auf. Diese kann mit der Lagerbüchse 9 oder dem Stopfgehäuse 6 verbunden sein.

An der Beschickungsöffnung 29 ist eine Kupplungsvorrichtung teilweise erkennbar, die dem Anschluss an eine Beschickungseinrichtung dient. Letztere kann als Schubkolben oder als Schnekkenförderer ausgebildet sein.

Seitlich des Führungsgestells 4 sind zur Feststellung des Füllstandes oder der Kolbenposition in dem Stopfgehäuse 6 und zur Steuerung der Beschickung des Stopfgehäuses sowie des Stopfdruckes Signalgeber 32 vorgesehen. Eine Initiatorbetätigungsleiste 33 bspw. ist mit dem Kolben 5 verbunden und erzeugt die entsprechenden Impulse der Signalgeber 32 für die Steuerung. In Fig. 2 ist durch eine gestrichelte Linie die untere Stellung der Initiatorbetätigungsleiste 33 angedeutet.

Im übrigen kann die Stopfeinheit 1 in senkrechter wie auch in waagrechter Lage und um ihre eigene Längsachse verdreht in jeder Stellung an einer Plastifiziereinrichtung 35 befestigt werden.

**Patentansprüche**

1. Vorrichtung für die Beschickung einer Plastifiziereinrichtung zur Verarbeitung zähflüssiger Massen wie Polyester oder dgl. Materialien, mit einer an einem jochartigen Führungsgestell an der Plastifiziereinrichtung etwa senkrecht abstehend befestigten, einen angetriebenen Kolben aufweisenden Stopfeinheit, dadurch gekennzeichnet, dass der Kolben (5) einerseits durch eine Kolbenwand (18) an dem Führungsgestell (4) und andererseits an einer wenigstens annähernd koaxial zum Kolben (5) an dem Führungsgestell (4) befestigten Führungssäule (13) verschiebbar gelagert ist.

2. Vorrichtung nach Anspruch 1, dadurch gekennzeichnet, dass die wenigstens annähernd zentral angeordnete Führungssäule (13) eine den Jochträger (7) des Führungsgestells (4) durchdringende erste Leitung für ein Druckmedium aufweist, die an dem gegenüberliegenden Ende der Führungssäule (13) in einen an der Rückseite des Kolbenbodens (16) gebildeten, veränderbaren ersten Hohlraum (17) mündet, und dass ein durch die Kolbenwand (18) und die Führungssäule (13) begrenzter, veränderbarer zweiter Hohlraum (20) mit einer zweiten Leitung verbunden ist.

3. Vorrichtung nach Anspruch 2, dadurch gekennzeichnet, dass die zweite Leitung in der Führungssäule (13) und dem Jochträger (7) angeordnet ist.

4. Vorrichtung nach einem der Ansprüche 2 und 3, dadurch gekennzeichnet, dass die Hohlräume (17, 20) wechselweise von einem Druckmedium beaufschlagbar bzw. entleerbar sind.

5. Vorrichtung nach einem der Ansprüche 2 bis 4, dadurch gekennzeichnet, dass eine von dem Kolbenboden (16) beabstandete Kolbenplatte (11) an einem mit dem Kolbenende verbundenen, im Abstand zur Kolbenwand (18) angeordneten Kolbenmantel (12) in dem Führungsgestell (4) verschiebbar gelagert ist.

6. Vorrichtung nach Anspruch 5, dadurch gekennzeichnet, dass Kolbenwand (18) und Kolbenmantel (12) einen Zwischenraum (22) bilden.

7. Vorrichtung nach einem der Ansprüche 2 bis 6, dadurch gekennzeichnet, dass das dem ersten Hohlraum (17) zugewendete Ende der Führungssäule (13) einen die Hohlräume (17, 20) trennenden, an der Kolbenwand (18) dicht anliegenden Bund aufweist.

8. Vorrichtung nach einem der Ansprüche 1 bis 7, dadurch gekennzeichnet, dass das Führungsgestell (4) mit einem an der Plastifiziereinrichtung (35) befestigten Stopfgehäuse (6) verbunden ist.

9. Vorrichtung nach Anspruch 8, dadurch gekennzeichnet, dass das Stopfgehäuse (6) etwa zylindrisch ausgebildet ist und anschliessend an eine mit einer etwa rechtwinklig angeordneten Beschickungsöffnung (29) ausgebildeten, erweiterten Füllzone (28) eine mit der Plastifiziereineinrichtung (35) verbundene Stopfzone (27) aufweist.

10. Vorrichtung nach Anspruch 9, dadurch gekennzeichnet, dass die Stopfzone (27) mit einer sich zur Plastifiziereinrichtung (34) hin verengenden Austrittszone (30) versehen ist.

11. Vorrichtung nach Anspruch 10, dadurch gekennzeichnet, dass die Austrittszone (30) im Querschnitt betrachtet von einem konkav ausgebildeten Anfangsbereich in einen konvexen Abschnitt übergeht.

12. Vorrichtung nach Anspruch 9, dadurch gekennzeichnet, dass die Stopfzone (27) als Führung des Stopfkolbens (5) ausgebildet ist.

13. Vorrichtung nach Anspruch 9, dadurch gekennzeichnet, dass die Füllzone (28) des Stopfgehäuses (6) etwa im Bereich der Kolbenlagerung an dem Führungsgestell (4) endet.

14. Vorrichtung nach Anspruch 13, dadurch gekennzeichnet, dass im Bereich der Kolbenlagerung eine zu der Füllzone (28) des Stopfgehäuses (6) hin wirksame Abstreifvorrichtung vorgesehen ist.

15. Vorrichtung nach einem der Ansprüche 8 bis 14, dadurch gekennzeichnet, dass die Beschikkungsöffnung (29) mit einer Kupplungsvorrichtung ausgebildet ist.

16. Vorrichtung nach einem der Ansprüche 1 bis 15, dadurch gekennzeichnet, dass das Führungsgestell (4) von dem Stopfgehäuse (6) wenigstens teilweise abhebbar ausgebildet ist.

17. Vorrichtung nach Anspruch 16, dadurch gekennzeichnet, dass das Führungsgestell (4) mittels Scharnier (25) an dem Stopfgehäuse (6) schwenkbar befestigt ist.

18. Vorrichtung nach einem der Ansprüche 8 bis 17, dadurch gekennzeichnet, dass zur Feststellung des Füllzustandes bzw. der Kolbenposition in dem Stopfgehäuse (6) und/oder zur Steuerung der Beschickung des Stopfgehäuses (6) seit lich an dem Führungsgestell (4) befestigte Signalgeber (32) angeordnet sind.

19. Vorrichtung nach einem der Ansprüche 10 und 11, dadurch gekennzeichnet, dass die Austrittszone (30) in einem von dem Stopfgehäuse (6) abnehmbaren Teil (34) angeordnet ist.

20. Vorrichtung nach Anspruch 19, dadurch gekennzeichnet, dass der abnehmbare Teil (34) des Stopfgehäuses (6) heiz- oder kühlbar ausgebildet ist.

# Fig. 1

Fig. 2